# EUROPEAN PATENT APPLICATION

(11) **EP 3 886 399 A1**
(43) Date of publication of application: **29.09.2021**
(21) Application number: 19909723.9
(22) Date of filing: 11.12.2019
(51) Int. Cl.: H04L 29/08

(54) **METHOD FOR INVOKING SERVER AND PROXY SERVER**

(30) Priority: 18.01.2019 CN 201910049730
(71) Applicant: Huawei Technologies Co., Ltd., Shenzhen Guangdong 518129 (CN)
(72) Inventor: LI, Linfeng, Shenzhen, Guangdong 518129 (CN); WANG, Shijun, Shenzhen, Guangdong 518129 (CN); WU, Jimin, Shenzhen, Guangdong 518129 (CN)
(74) Representative: Isarpatent
(86) International application number: PCT/CN2019/124509
(87) International publication number: WO 2020/147466

(57) **Abstract**

This application provides a server invocation method and a proxy server. The method is used by at least one first server in a first server cluster to invoke at least one second server in a second server cluster. The first server cluster further includes a first server registration center and a proxy server. The second server cluster further includes a second server registration center. The method includes: The proxy server sends a first subscription message to the second server registration center based on configuration information, where the first subscription message is used to subscribe to information about the at least one invoked second server. The proxy server receives the information about the at least one invoked second server sent by the second server registration center and registers the information about the at least one invoked second server with the first server registration center, so that the at least one first server invokes the at least one second server. The technical solution provided in this application can improve performance of invoking a server across server clusters.

## Description

This application claims priority to Chinese Patent Application No. 201910049730.3, filed with the China National Intellectual Property Administration on January 18, 2019 and entitled "SERVER INVOCATION METHOD AND PROXY SERVER", which is incorporated herein by reference in its entirety.

### TECHNICAL FIELD

This application relates to the communications field, and more specifically, to a server invocation method and a proxy server.

### BACKGROUND

With development of services, an increasing quantity of Chinese companies start to implement international expansion strategies, and deploy services in servers in different regions (Region) such as international regions to serve local people. However, due to service operation, personal privacy data protection, local laws and regulations, or the like, some services can be deployed only in servers in specific regions. Consequently, server invokers deployed in other regions need to invoke, across regions, servers provided by server providers in some regions. Servers in different regions belong to different server clusters, server registration centers in the server clusters are individually deployed, and a server can only be invoked across different server clusters when server load balancing (server load balancing, SLB) is deployed in a server cluster including a server provider. Therefore, a server invocation process needs to be implemented through SLB routing and forwarding, causing poor performance of invoking a server across server clusters. Therefore, how to improve performance of invoking a server across server clusters becomes an urgent problem to be resolved.

### SUMMARY

This application provides a server invocation method and a proxy server. A proxy server that can subscribe to information about a server across server clusters is deployed in a server cluster, to improve performance of invoking a server across server clusters.

According to a first aspect, a server invocation method is provided. The method is used by at least one first server in a first server cluster to invoke at least one second server in a second server cluster. The first server cluster further includes a first server registration center and a proxy server. The second server cluster further includes a second server registration center. The method includes: The proxy server sends a first subscription message to the second server registration center based on configuration information, where the first subscription message is used to subscribe to information about the at least one invoked second server. The proxy server receives a response message sent by the second server registration center, where the response message carries the information about the at least one invoked second server. The proxy server registers the information about the at least one invoked second server with the first server registration center, so that the at least one first server invokes the at least one second server.

It should be understood that "first" and "second" described above are merely intended to distinguish between different servers or different server clusters, and do not constitute any limitation on this application. The first server is a server that is in the first server cluster and that needs to invoke the second server in the second server cluster. Therefore, the first server may also be referred to as a server invoker, and the second server may also be referred to as a server provider. In addition, in this application, it is not limited that the first server in the first server cluster is used only as a server invoker. In another case, the first server may be used as a server provider and be invoked by another server.

According to the server invocation method provided in this embodiment of this application, the proxy server is deployed in the first server cluster, and the proxy server can subscribe to, from another server cluster based on the configuration information, information about a server that needs to be invoked by a server invoker in the first server cluster, and registers the subscribed server information with the first server registration center in the first server cluster. In other words, the server invoker in the first server cluster can directly subscribe to, from the first server registration center, a server provided by a server provider in another server cluster. This improves performance of invoking a server across server clusters.

It should be understood that the proxy server in this application may subscribe to server information from a server cluster other than a plurality of first server clusters.

Preferably, there is no intersection set between the first server cluster and the second server cluster. In other words, servers included in the first server cluster are different from servers included in the second server cluster.

With reference to the first aspect, in some implementations of the first aspect, the configuration information is configuration information pre-configured in the proxy server.

According to the server invocation method provided in this embodiment of this application, a manner in which the proxy server learns of the foregoing configuration information may be as follows: When the proxy server is deployed in the first server cluster, a developer writes the configuration information into the proxy server as preset configuration information of the proxy server. Therefore, the proxy server can learn of the configuration information when running.

With reference to the first aspect, in some implementations of the first aspect, the method further includes: The proxy server receives a trigger message sent by the first server registration center, where the trigger message carries the configuration information, the trigger message is generated in response to that the first server registration center receives second subscription messages respectively sent by the at least one first server, and the trigger message is used to trigger the proxy server to obtain the information about the at least one server.

According to the server invocation method provided in this embodiment of this application, a manner in which the proxy server learns of the foregoing configuration information may be as follows: A server invoker that is in the first server cluster and that needs to invoke a server across server clusters registers an identifier of a server cluster including a server that needs to be invoked, an address of a server registration center in the server cluster, a name of an application to which the server belongs, and a name of the server with the first server registration center through a second subscription message. The first server registration center determines the configuration information based on a plurality of received second subscription messages, and then sends the configuration information to the proxy server, so that the proxy server can learn of the configuration information.

With reference to the first aspect, in some implementations of the first aspect, the method further includes: The proxy server receives at least one piece of first indication information respectively sent by the at least one first server; and the proxy server determines the configuration information based on the at least one piece of first indication information, where the first indication information is used to indicate the proxy server to obtain the information about the at least one invoked second server.

According to the server invocation method provided in this embodiment of this application, a manner in which the proxy server learns of the foregoing configuration information may be as follows: A server invoker that is in the first server cluster and that needs to invoke a server across server clusters registers an identifier of a server cluster including a server that needs to be invoked, an address of a server registration center in the server cluster, a name of an application to which the server belongs, and a name of the server with the first server registration center as the configuration information, so that the proxy server can learn of the configuration information.

This embodiment of this application provides a plurality of manners in which the proxy server can learn of the configuration information, thereby improving flexibility of the solution of invoking a server across server clusters.

With reference to the first aspect, in some implementations of the first aspect, the information about the at least one second server is used by the first server to invoke the second server according to a preset routing rule.

According to the server invocation method provided in this embodiment of this application, when servers that can be invoked by a specific server invoker are deployed in a plurality of second server clusters and a specific second server cluster includes a plurality of servers that can be invoked, the server invoker can select a server from a specific server cluster for server invocation according to the preset routing rule.

With reference to the first aspect, in some implementations of the first aspect, the preset routing rule includes: a level-1 routing rule, used to route server invocation information of the first server to the second server cluster; and a level-2 routing rule, used to route the server invocation information of the first server to the first server after the server invocation information of the first server is routed to the second server cluster.

According to the server invocation method provided in this embodiment of this application, the preset routing rule includes the level-1 routing rule and the level-2 routing rule. The level-1 routing rule is used to select a specific server cluster that meets the level-1 routing rule, and the level-2 routing rule is used to select a server that meets the level-2 routing rule from the server cluster to complete server invocation.

In other words, in this embodiment of this application, a difference between a preset routing rule for the first server that needs to invoke a server across server clusters and a routing rule of invoking a server in one server cluster is as follows: A server cluster needs to be first determined from a plurality of server clusters, and then a server is selected from the server cluster for invoking. When a server is invoked according to a preset routing rule, an optimal server may be selected for invoking by setting different preset routing rules. This further improves performance of invoking a server.

With reference to the first aspect, in some implementations of the first aspect, the response message includes second indication information, and the second indication information is used to indicate a faulty second server in the at least one second server.

According to the server invocation method provided in this embodiment of this application, when the proxy server subscribes to information about a second server from another server cluster, to ensure that the subscribed second server can be invoked, when the subscribed second server is faulty and cannot be invoked, a server registration center in a server cluster including the faulty second server adds second indication information indicating the faulty second server to a response message, to notify the proxy server. This further ensures correctness of invoking a server.

With reference to the first aspect, in some implementations of the first aspect, the first subscription message is carried in a heartbeat request message.

According to the server invocation method provided in this embodiment of this application, the proxy server may periodically send the first subscription message by adding the first subscription message to the heartbeat request message, to ensure that the first subscription message is periodically sent. Further, the response message may be a heartbeat response message, to ensure that the response message is periodically fed back. It is ensured that, when an invoked second server is faulty, the fault is fed back to the proxy server in time.

With reference to the first aspect, in some implementations of the first aspect, the configuration information includes an identifier of the second server cluster, an address of the second server registration center, a name of an application to which the at least one second server belongs, and a name of the at least one second server.

According to the server invocation method provided in this embodiment of this application, to enable the proxy server to complete a server subscription function based on the configuration information, the configuration information needs to include a server cluster including an invoked server and address information of a server registration center in the server cluster. In this way, the proxy server can learn of a server registration center in a specific server cluster from which information about an invoked server is subscribed to. Further, the proxy server needs to determine, based on the configuration information, information about a specific server that is subscribed to from the server registration center. Therefore, the configuration information further needs to include a name of an application to which the invoked server belongs and a name of the invoked server. This ensures that the proxy server can accurately subscribe to information about an invoked server.

With reference to the first aspect, in some implementations of the first aspect, the subscription message carries the name of the application to which the at least one second server belongs and the name of the at least one second server.

According to the server invocation method provided in this embodiment of this application, to enable a server registration center in a server cluster including a server that needs to be invoked across server clusters to feed back corresponding server information, a subscription message sent by the proxy server to the server registration center needs to carry a name of an application to which the server that needs to be invoked across server clusters belongs and a name of the server that needs to be invoked across server clusters. In this way, the server registration center can feed back, to the proxy server based on the subscription message, corresponding information about the server that needs to be invoked across server clusters, so that the proxy server can subscribe to the information about the server that needs to be invoked.

With reference to the first aspect, in some implementations of the first aspect, the first server cluster and the second server cluster are located in different regions.

According to the server invocation method provided in this embodiment of this application, the first server cluster including a server invoker that needs to invoke a server across server clusters and the second server cluster including an invoked server may be server clusters in different regions. Because different server clusters are usually deployed based on different regions, the server invocation method provided in this embodiment of this application is applicable to cross-region server invocation.

With reference to the first aspect, in some implementations of the first aspect, the information about the server includes the name, address information, and interface information of the second server.

According to the server invocation method provided in this embodiment of this application, to ensure that the first server can successfully invoke a server, the information about the server that the proxy server subscribes to needs to include the name, the address information, and the interface information of the second server. This further ensures that the first server can accurately determine the corresponding second server based on the name, the address information, and the interface information of the second server, to complete server invocation.

According to a second aspect, a proxy server is provided. The proxy server is deployed in a first server cluster, and is configured to perform the method according to the first aspect or any possible implementation of the first aspect. The first server cluster further includes a first server registration center and at least one first server. The at least one first server invokes at least one second server from a second server cluster. The second server cluster further includes a second server registration center. Specifically, the proxy server includes modules configured to perform the method according to the first aspect or any possible implementation of the first aspect.

According to a third aspect, a proxy server is provided, including a communications interface, a processor, and a memory. The communications interface is configured to send and receive information. The memory is configured to store a computer program. The processor is configured to invoke the computer program from the memory and run the computer program, so that the proxy server performs the method according to the first aspect and any possible implementation of the first aspect.

According to a fourth aspect, a server architecture is provided, including the foregoing first server cluster and the foregoing second server cluster.

According to a fifth aspect, a computer program product is provided. The computer program product includes computer program code. When the computer program code is run on a computer, the computer is enabled to perform the method according to the foregoing aspect.

According to a sixth aspect, a computer-readable medium is provided, and is configured to store a computer program. The computer program includes an instruction used to perform the method according to the foregoing aspect.

According to a seventh aspect, a chip system is provided, and includes a processor. The processor is configured to invoke a computer program from a memory and run the computer program. The computer program is used to implement the method according to the foregoing aspect.

According to the server invocation method and the proxy server provided in embodiments of this application, the proxy server is deployed in the first server cluster, and the proxy server can subscribe to, from another server cluster for a first server that is in the first server cluster and that needs to invoke a server across server clusters, a second server that needs to be invoked. This improves performance of invoking a server across server clusters.

### BRIEF DESCRIPTION OF DRAWINGS

FIG. 1 is a schematic diagram of a scenario to which an embodiment of this application is applicable;
FIG. 2 is a schematic diagram of invoking a server in one server cluster;
FIG. 3 is a schematic diagram of invoking a server across different server clusters in the prior art;
FIG. 4 is a schematic diagram of a method for invoking a server across server clusters according to an embodiment of this application;
FIG. 5 is a schematic diagram of another server invocation method according to an embodiment of this application;
FIG. 6 is a schematic diagram of proxy server registration according to an embodiment of this application;
FIG. 7 is a schematic diagram of application of a server invocation method according to an embodiment of this application; and
FIG. 8 is a schematic diagram of a proxy server 10 according to an embodiment of this application.

### DESCRIPTION OF EMBODIMENTS

The following describes technical solutions of this application with reference to the accompanying drawings.

The following describes the technical solutions in the embodiments of this application with reference to the accompanying drawings in the embodiments of this application. In descriptions of the embodiments of this application, unless otherwise specified, "/" means "or". For example, A/B may represent A or B. In this specification, "and/or" describes only an association for describing associated objects and represents that three relationships may exist. For example, A and/or B may represent the following three cases: Only A exists, both A and B exist, and only B exists. In addition, in the descriptions of the embodiments of this application, "a plurality of" means two or more.

A server invocation method provided in the embodiments of this application may be applied to a cross-region server invocation process.

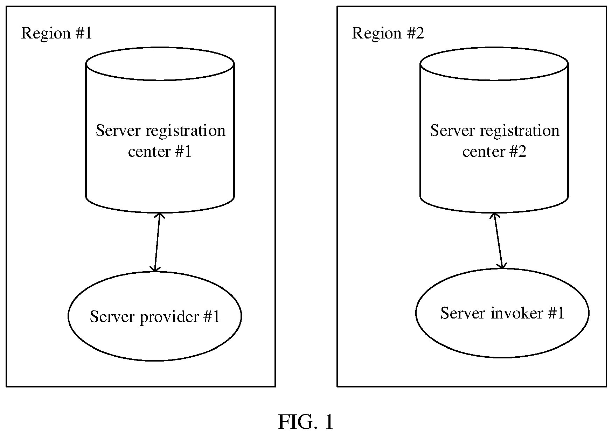

FIG. 1 is a schematic diagram of a scenario to which an embodiment of this application is applicable. The schematic diagram includes a server registration center #1, a server registration center #2, a server provider #1 that belongs to a same region #1 as the server registration center #1, and a server invoker #1 that belongs to a same region #2 as the server registration center #2.

The server registration center is an important component in a server architecture, and mainly functions as a coordinator in the server architecture. The server registration center may be considered as a node for registering and managing information such as a server address and an attribute in the server architecture.

For example, the server registration center receives server registration information of a server provider in a server cluster including the server registration center, releases the server registration information to a server invoker that subscribes to the server provider in the server cluster, and provides functions such as server subscription release and change notification, so as to implement server invocation in the server cluster including the server registration center.

Specifically, the server registration center has the following functions:

### (1) Server discovery

Server registration/deregistration: The server registration/deregistration is storing information about the server provider and information about the server invoker.

Server subscription/unsubscription: The server invoker subscribes to the information about the server provider.

Server route selection: The server route selection is server provider screening and integration.

### (2) Server Configuration

Configuration subscription: The server provider and the server invoker subscribe to server-related configurations.

Configuration delivery: The configuration delivery is proactively pushing configurations to the server provider and the server invoker.

### (3) Server health detection

A health condition of the server provider is detected. The health condition of the server provider indicates whether the server provider can run normally to implement a corresponding function.

Server provider: The server provider is a server invoked by the server invoker.

Server invoker: The server invoker is a server that invokes the server provider.

It should be understood that the server registration center, the server provider, and the server invoker are merely possible names, and do not constitute any limitation on this application. For example, the server registration center may also be referred to as a micro server registration center or a registration center, the server provider may also be referred to as a server providing end, and the server invoker may also be referred to as a server consumer end.

It should be further understood that a quantity of server registration centers, a quantity of regions, and a quantity of server providers or server invokers that belong to a same region as each server registration center shown in FIG. 1 are merely examples, and do not constitute any limitation on this application. For example, the region #1 in FIG. 1 may further include a server provider or a server invoker other than the server provider #1 shown in FIG. 1, and examples are not described one by one herein.

It can be learned from FIG. 1 that servers included in each region constitute a server cluster, and the server registration centers in the regions are individually deployed. Therefore, server invokers in different regions cannot directly subscribe to mutual server providers, and only a server invoker in one server cluster can directly subscribe to a server provider in the server cluster.

With reference to FIG. 1, the foregoing briefly describes a scenario to which the server invocation method provided in the embodiments of this application can be applied. Before the embodiments of this application are described in detail, to facilitate understanding of the solutions of this application, several basic concepts related to the server invocation method provided in the embodiments of this application are first briefly described below. It may be understood that specific descriptions in these basic concepts are merely examples, and do not constitute a limitation on the basic concepts.

### 1. Service

The service is a type of an application that runs in the background of a system, that is, an application programming interface. Specifically, with rapid development of the Internet, there are an increasing quantity of applications, and interaction between applications is inevitable. A microservice in a business technology architecture means dividing applications based on different function modules and extracting a core service as an independent service. In this way, a stable service center is gradually formed, so that front-end applications can quickly respond to changing market requirements. In addition, different applications can share back-end public capabilities, thereby reducing repeated development costs.

The microservice is a software architecture style (software architecture style) of combining small building blocks (small building blocks) that focus on a single responsibility and function into a complex large-scale application through modularization. Currently, most large-scale national and international Internet enterprises have implemented microservice-based development. For example, Amazon Web Services (amazon web services, AWS) uses a microservice framework of a self-developed coral service to implement microservice-based services, and Netflix (Netflix) uses a microservice framework to complete frontend-backend video service splitting and microservices.

It should be understood that the microservice described in the embodiments of this application has a wider scope, including a service-oriented architecture (service oriented architecture, SOA) microservice, a microservice developed based on a distributed service framework, or a business service/microservice constructed based on an open-source service framework.

It should be further understood that the service described in the embodiments of this application includes the microservice.

### 2. Server

The server is also referred to as a servomotor, and is a device that provides a computing service. The server needs to respond to a service request and performs processing. Therefore, generally, the server needs to have capabilities of bearing a service and guaranteeing the service. The server includes a processor, a hard disk, a memory, a system bus, and the like. An architecture of the server is similar to a general computer architecture. However, because the server needs to provide highly reliable services, the server has high requirements on a processing capability, stability, reliability, security, scalability, manageability, and the like. In a network environment, servers are classified into file servers, database servers, application servers, and the like based on different types of services provided by the servers.

The server in this application is a device that provides a service.

### 3. Region

The region is generally a geographic region, for example, Asia Pacific, Latin America, and West Asia and North Africa.

### 4. Globalization

Globalization is a concept and is a human social development process. There are many definitions of globalization. Generally, globalization means continuous enhancement of global connections, global-scale development of human life, and rise of global consciousness. In the embodiments of this application, globalization means that business services are deployed in different regions around the world to serve users in each region.

### 5. Server cluster

A plurality of servers and one server registration center constitute a server cluster, and one server cluster may include a plurality of server invokers and/or server providers described above.

It should be understood that the server registration center may be a server registration center including one or more servers. It should be further understood that the foregoing servers that belong to different regions necessarily belong to different server clusters. For example, the server provider #1 in the region #1 and the server invoker #1 in the region #2 in FIG. 1 necessarily belong to two different server clusters.

It should be further understood that one region may also include different server clusters, in other words, servers in one region may not necessarily belong to a same server cluster. For example, a relatively large region may include a plurality of instantaneous deviation control (instantaneous deviation control, IDC) equipment rooms, and one server cluster may be deployed in each IDC equipment room, in other words, the region includes a plurality of different server clusters.

### 6. Server invocation

A server invoker discovers a server provider and invokes the server provider to implement server invocation. It should be understood that server invocation in this application means that the server invoker needs to invoke a service provided by the server provider, so that the server invoker can implement a service function in the server provider.

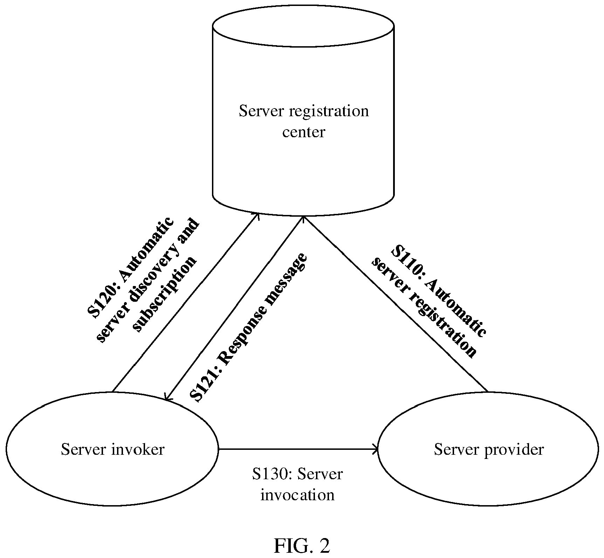

First, before service globalization, a server cannot be invoked across server clusters. A procedure of invoking a server in one server cluster is briefly described with reference to FIG. 2.

FIG. 2 is a schematic diagram of invoking a server in one server cluster. The schematic diagram includes a server registration center, a server invoker, and a server provider. The server registration center, the server invoker, and the server provider are located in one server cluster. The schematic diagram further includes three steps S110 to S130. The following briefly describes the three steps.

S110: The server provider in the server cluster automatically registers with the server registration center in the server cluster.

To be specific, the server registration center in the server cluster receives registration information of the server provider in the server cluster, and the server registration center in the server cluster manages the servers in the server cluster.

For example, a server provider #1 registers information about the server provider such as a name, an interface, and an address with the server registration center, where the address of the server provider can be used to determine the server provider, and the interface information can indicate a function of the server provider.

S120: The server invoker in the server cluster automatically discovers a server in the server registration center in the server cluster and subscribes to the server.

To be specific, the server invoker in the server cluster can learn of, by using the server registration center in the server cluster, the server provider that can be subscribed to.

Specifically, the server invoker sends a subscription request message to the server registration center, and the subscription request message carries a name of a server provider that needs to be invoked by the server invoker.

For example, the server invoker sends the subscription request message to the server registration center, where the subscription message is used to subscribe to information about the server provider that needs to be invoked by the server invoker.

After receiving the subscription message, the server registration center selects, from information locally registered in the server invoker, a plurality of server providers that can be invoked, and performs S121. The server registration center sends a response message to the server invoker, and the response message includes addresses and interface information of the plurality of server providers.

S130: The server invoker in the server cluster invokes the server provider in the server cluster.

The server invoker invokes one of the plurality of server providers according to a pre-configured routing rule.

The pre-configured routing rule includes any one of the following:
(1) Random routing policy: randomly routing server invocation information to a server provider based on a random algorithm, and then invoking the server provider to which the routing points.
(2) Delay weight policy: allocating different weight coefficients based on average service invocation delays for all server providers. When a delay is shorter, a weight coefficient is larger, more invocation messages are allocated to a low-delay server provider. Finally, more messages are routed to a server provider that quickly performs processing, and fewer messages are routed to a server provider that slowly performs processing.
(3) Specified server provider policy: pre-configuring a routing sequence, preferentially performing routing to a specified server provider, and switching to another server provider only when each specified server provider is unavailable.

Specifically, the server invoker in the server cluster uses a remote procedure call (remote procedure call, RPC) protocol to implement a peer-to-peer (peer to peer, P2P) server provider invocation. The RPC protocol is a protocol that requests a server from a remote computer program through a network without a need of understanding an underlying network technology. The RPC protocol assumes that some transmission protocols such as a transmission control protocol (transmission control protocol, TCP) and a user datagram protocol (user datagram protocol, UDP) exist, so as to carry information and data between communication programs.

It can be learned from FIG. 2 that a server invoker located in one server cluster may directly invoke a server provider in the server cluster, to implement server invocation.

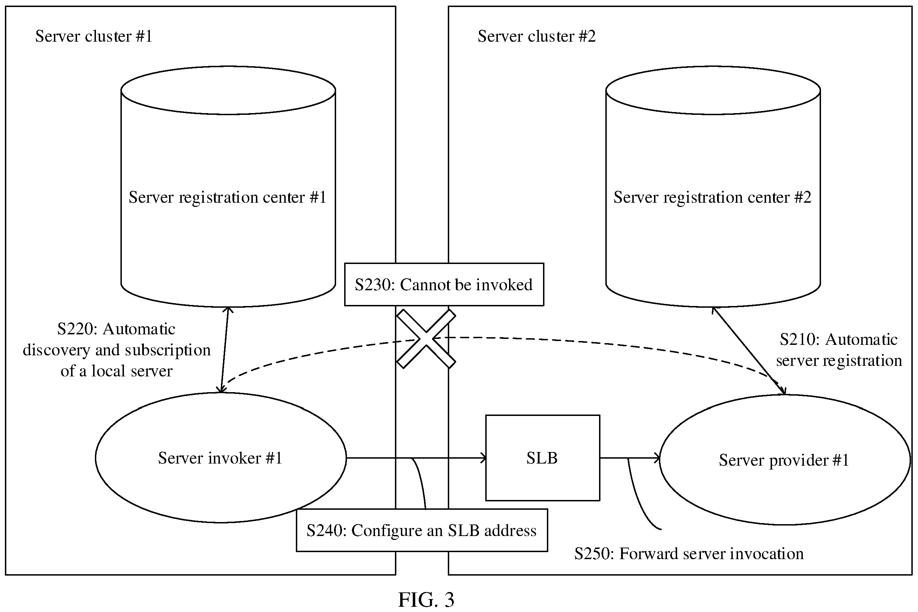

Under the premise of service globalization development, a server needs to be invoked across server clusters. A procedure of invoking a server across different server clusters is briefly described below with reference to FIG. 3.

FIG. 3 is a schematic diagram of invoking a server across different server clusters. The schematic diagram includes a server registration center #1, a server invoker #1 located in a same server cluster #1 as the server registration center #1, a server registration center #2, a server provider #1 located in a same server cluster #2 as the server registration center #2, and server load balancing (server load balancing, SLB). The SLB is deployed at a front end of the server cluster #2 including the server provider #1.

Specifically, the SLB includes a routing rule, and the routing rule is routing server invocation information of different server clusters to a server provider corresponding to a back end in a server cluster including the SLB. The server invoker configures an SLB address of a provider that is required to invoke a server across server clusters. An SLB proxy service is accessed to perform load balancing and message forwarding through the SLB. Finally, the server invocation is routed to the server provider corresponding to the back end. The SLB address is a public network address and can be obtained by the server invoker.

The schematic diagram further includes five steps S210 to S250. The following briefly describes the five steps.

S210: The server provider #1 in the server cluster #2 automatically registers with the server registration center #2 in the server cluster #2.

To be specific, the server registration center #2 in the server cluster #2 receives registration information of the server provider #1 in the server cluster #2, and the server registration center #2 in the server cluster #2 manages a service in the server cluster #2.

S220: The server invoker #1 in the server cluster #1 automatically discovers and subscribes to a server in the server registration center #1 in the server cluster #1.

To be specific, the server invoker #1 in the server cluster #1 can learn of, by using the server registration center #1 in the server cluster #1, a server that can be subscribed to and a server provider of the server. In other words, the server invoker #1 in the server cluster #1 can only directly subscribe to a server in the server cluster #1.

S230: The server invoker #1 in the server cluster #1 cannot invoke a server in the server cluster #2.

To be specific, because the server in the server cluster #1 and the server in the server cluster #2 belong to two different server clusters in different cluster networking, the server invoker #1 in the server cluster #1 cannot subscribe to a server deployed in another server cluster.

In other words, because servers deployed in different server clusters belong to different server clusters, the server invoker in the server cluster #1 cannot automatically discover the server provider in the server cluster #2. Consequently, automatic server routing cannot be performed, and only one SLB proxy can be deployed to perform routing distribution across server clusters through the SLB. In other words, S240 and S250 are performed to implement server invocation.

S240: The server invoker #1 configures an SLB address that is required to invoke a server across server clusters.

The server invoker #1 configures the address of the SLB deployed in the server cluster #2, and forwards an invocation message through the SLB proxy.

S250: The SLB forwards server invocation.

The SLB performs load balancing and forwards the invocation message, to route the server invocation information to the server provider #1 corresponding to the back end.

Different from the RPC call in FIG. 2, invoking the server provider #1 by the server invoker #1 shown in FIG. 3 is hypertext transfer protocol secure (hyper text transfer protocol over secure socket layer, HTTPS) call.

In conclusion, for the server invocation across server clusters shown in FIG. 3, because servers deployed in different server clusters belong to different server clusters, and a server invoker in one server cluster cannot automatically discover a server provider in another server cluster, the server invoker cannot implement automatic routing of server invocation, and can only implement routing distribution of server invocation across server clusters through the SLB by deploying an SLB proxy in the server cluster including the server invoker. This technical solution has the following disadvantages:
(1) A server invocation delay is increased: As shown in FIG. 2, a TCP link is directly established between a server invoker and a server provider in one server cluster for P2P RPC invocation, and performance is relatively high. However, for the server invocation across server clusters shown in FIG. 3, the invocation message of the server invoker needs to be forwarded through the SLB, which increases a delay, network overheads, and a potential fault point.
(2) Server invocation reliability is reduced: Compared with the RPC call shown in FIG. 2, the server invocation across server clusters shown in FIG. 3 is HTTPS call. In this case, functions such as load balancing, automatic retry upon a failure, fault isolation, circuit breaker and degradation, and flow control that are built in a service framework cannot be used, and consequently the server invocation reliability is reduced.
(3) Resources and O&M management costs for server invocation are increased: To implement invocation across server clusters, SLB server deployment and SLB routing rule development and maintenance are added, which increases system resource overheads, research and development costs, and O&M costs.

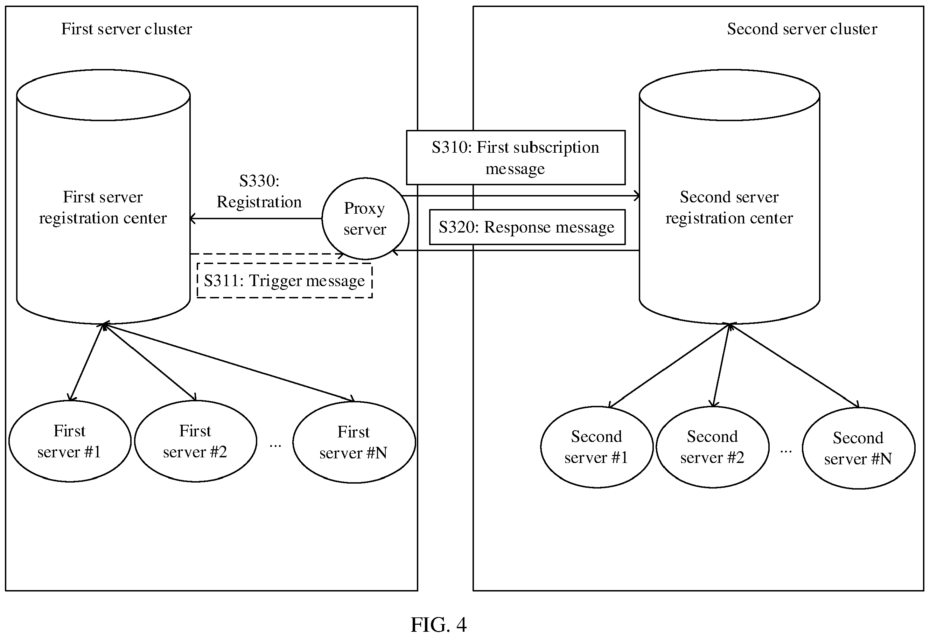

To resolve the foregoing problems that exist during the server invocation across server clusters in FIG. 3, this application provides a server invocation method, to improve performance of the server invocation across server clusters. With reference to FIG. 4 to FIG. 7, the following describes in detail the server invocation method provided in the embodiments of this application.

FIG. 4 is a schematic diagram of a method for invoking a server across server clusters according to an embodiment of this application. The schematic diagram includes:
a first server cluster, where the first server cluster includes a first server registration center, a proxy server, and at least one first server (a first server #1 to a first server #N shown in FIG. 4); and
a second server cluster, where the second server cluster includes a second server registration center and at least one second server (a second server #1 to a second server #N shown in FIG. 4), and there is no intersection set between the first server cluster and the second server cluster.

The schematic diagram further includes three steps S310 to S330. The following describes the three steps in detail.

S310: The proxy server sends a first subscription message to the second server registration center.

Specifically, the proxy server may separately send the first subscription message to at least one second server registration center based on configuration information, where each first subscription message is used to subscribe to information about at least one second server.

For example, if the configuration information indicates that the proxy server needs to obtain information about corresponding to-be-invoked second servers from three different second server registration centers, the proxy server respectively sends three subscription messages to the three second server registration centers, where each subscription message is used to subscribe to information about a to-be-invoked second server in a corresponding second server registration center. Content in the configuration information and a source of the configuration information are described in detail below, and details are not described herein.

The at least one second server registration center respectively belongs to at least one second server cluster, the proxy server is a server that is in the first server cluster and that can be connected to the at least one second server registration center, and the at least one second server is a server that is subscribed to by the at least one first server in the first server cluster and that belongs to the at least one second server cluster.

For example, the at least one second server is a server that needs to be invoked by the at least one first server across server clusters, and may be referred to as a to-be-invoked server or a target server. The at least one second server subscribed to by using the first subscription message is referred to as at least one target server or server provider below.

Specifically, in this embodiment, that at least one first server invokes at least one second server is described. Therefore, in this embodiment, the first server may be considered as the foregoing server invoker, and the second server may be considered as the foregoing server provider. However, in this application, the first server is not necessarily a server invoker. In another scenario, the first server may be a server provider invoked by another server, and is a server provider. Likewise, in this application, the second server is not necessarily a server provider. In another scenario, the first server may be a server invoker that invokes another server. Based on a setting that the first server needs to invoke the second server in this embodiment, the at least one first server is referred to as at least one server invoker below. In addition, to facilitate understanding of how to invoke a server across clusters, only the at least one first server (server invoker) is shown in the first server cluster and only the at least one second server (server provider) is shown in the second server cluster in FIG. 4. However, a person skilled in the art may understand that the first server cluster may further include at least one server provider, and the second server cluster may further include at least one server invoker. Details are not described herein.

It should be understood that the proxy server is merely used to distinguish from another server in the first server cluster, and does not affect the protection scope of the embodiments of this application. All other servers that can implement functions of the proxy server in this application fall within the protection scope of this application.

For example, from the perspective of a function implemented by the proxy server, the proxy server may be referred to as a registration center proxy server (Proxy) of the first server registration center, or the proxy server may be referred to as a proxy for short.

Specifically, there may be no intersection set between the first server cluster and the second server cluster. For example, the first server cluster belongs to one region, and the second server cluster belongs to another region; or the first server cluster and the second server cluster may belong to one region, but the first server cluster and the second server cluster are two different server clusters in the region. It should be understood that a specific condition in which two server clusters may be referred to as different server clusters may be determined in any existing manner of dividing different server clusters. This is not limited in this application.

For ease of description, in FIG. 4, an example in which a proxy server sends a first subscription message to a second server registration center in one second server cluster is used for description. It should be understood that, during actual application, there may be a plurality of second server clusters, and each cluster includes one server registration center. In this case, the proxy server in this application may send first subscription messages to server registration centers in the plurality of second server clusters. The second server cluster shown in FIG. 4 is any one of the at least one second server cluster, and the second server registration center in FIG. 4 is a server registration center in a corresponding second server cluster. FIG. 4 is merely an example, and cannot limit the protection scope of this application.

The configuration information may be used to determine a specific second server registration center in a specific second server cluster to which the proxy server sends the first subscription message. In addition, the proxy server may determine, based on the configuration information, a specific target server whose information is to be obtained. Therefore, in this embodiment of this application, how the proxy server obtains the configuration information is crucial. The following provides several manners in which the proxy server can learn of the configuration information.

Manner 1: The configuration information is configuration information pre-configured in the proxy server.

In other words, when the proxy server is deployed in the first server cluster, a developer has learned of a specific server invoker that is in the first server cluster and that needs to invoke a target server across server clusters, and a specific server cluster and a specific application to which the target server that needs to be invoked belongs to. When deploying the proxy server, the developer writes the obtained information into the proxy server as preset configuration information. In other words, when running, the proxy server in the first server cluster may correspondingly subscribe to, in the at least one second server registration center based on the configuration information that is preset in the proxy server, information about the target server that needs to be invoked by the at least one server invoker in the first server cluster.

Specifically, that the developer has learned of a specific server invoker that is in the first server cluster and that needs to invoke a target server across server clusters may be that the server invoker in the first server cluster manually sends the information about the target server to the developer of the proxy server by using an email, a configuration file, or the like.

For example, the first server cluster includes three server invokers that each need to invoke a target server across server clusters, and the three server invokers respectively send second subscription messages to the first server registration center in the first server cluster, where each second subscription message includes a name of a server cluster including a target server that needs to be invoked by each server invoker, an address of a server registration center in the server cluster including the target server, a name of an application to which the target server belongs, and a name of the target server. When the developer deploys a proxy server in a first server cluster, it is determined, based on a name of a server cluster including a target server, an address of a server registration center in the server cluster including the target server, a name of an application to which the target server belongs, and a name of the target server that are in a second subscription message that is received by the server registration center in the first server cluster and that is sent by each server invoker that needs to invoke a server across server clusters, that preset configuration information needs to be written into the proxy server, to deploy the proxy server.

It is assumed that, in the three server invokers, the server invoker #1 needs to invoke a target server #a that is in a server cluster #2 and that belongs to an application #A, the server invoker #2 needs to invoke a target server #b that is in a server cluster #3 and that belongs to an application #B, and the server invoker #3 needs to invoke a target server #c that is in a server cluster #4 and that belongs to an application #C. When the developer deploys a proxy server, configuration information includes the server cluster #2 to the server cluster #4, addresses of a server registration center #2 to a server registration center #4 in the server cluster #2 to the server cluster #4, the application #A to the application #C, and the target server #a to the target server #c. In this case, after the proxy server is deployed in the first server cluster, the proxy server may respectively send a subscription message #1 to a subscription message #3 to the server registration centers in the server cluster #2 to the server cluster #4 based on the configuration information, where the subscription message #1 is used to subscribe to, from the server registration center #2 in the server cluster #2, the target server #a that belongs to the application #A, the subscription message #2 is used to subscribe to, from the server registration center #3 in the server cluster #3, the target server #b that belongs to the application #B, and the subscription message #3 is used to subscribe to, from the server registration center #4 in the server cluster #4, the target server #c that belongs to the application #C.

Manner 2: The configuration information is sent by the first server registration center to the proxy server.

For example, as shown in FIG. 4, the procedure of the server invocation method provided in this embodiment of this application further includes S311. The first server registration center sends a trigger message to the proxy server, where the trigger message carries the configuration information. Specifically, the trigger message is used to trigger the proxy server to obtain the information about the at least one target server based on the configuration information.

In other words, in Manner 2, the developer does not need to write the configuration information into the proxy server when deploying the proxy server in the first server cluster. In a process of invoking a server across server clusters, the first server registration center may trigger the proxy server to invoke the server across the server clusters.

For example, the first server cluster includes three server invokers that each need to invoke a target server across server clusters, and the three server invokers respectively send second subscription messages to the first server registration center in the first server cluster, where each second subscription message includes a name of a server cluster including a target server that needs to be invoked by each server invoker, an address of a server registration center in the server cluster including the target server, a name of an application to which the target server belongs, and a name of the target server. Further, the first server registration center adds, as the configuration information, the name of the server cluster that needs to be invoked across server clusters, the address of the server registration center in the server cluster including the target server, the name of the application to which the target server belongs, and the name of the target server that are in the received second subscription message to a trigger message used to trigger the proxy server to obtain information about the at least one target server, and then sends the trigger message to the proxy server. In this case, after receiving the trigger message, the proxy server separately sends the first subscription message to the at least one second server registration center based on the configuration information carried in the trigger message, to obtain the information about the at least one target server.

It is assumed that, in the three server invokers, the server invoker #1 needs to invoke a target server #a that is in a server cluster #2 and that belongs to an application #A, the server invoker #2 needs to invoke a target server #b that is in a server cluster #3 and that belongs to an application #B, and the server invoker #3 needs to invoke a target server #c that is in a server cluster #4 and that belongs to an application #C.

First, the server invoker #1 to the server invoker #3 respectively send a subscription message #1 to a subscription message #3 to the first server registration center, where the subscription message #1 carries information about the target server #a that is subscribed to by a server registration center #2 in the server cluster #2 and that belongs to the application #A, the subscription message #2 carries information about the target server #b that is subscribed to by a server registration center #3 in the server cluster #3 and that belongs to the application #B, and the subscription message #3 carries information about the target server #c that is subscribed to by a server registration center #4 in the server cluster #4 and that belongs to the application #C.

Then, the first server registration center determines the configuration information based on the received subscription message #1 to subscription message #3. Specifically, the configuration information includes the server cluster #2 to the server cluster #4, addresses of the server registration center #2 to the server registration center #4 in the server cluster #2 to the server cluster #4, the application #A to the application #C, and the target server #a to the target server #c.

In addition, the first server registration center determines that each of the server invoker #1 to the server invoker #3 invokes a server across server clusters. Therefore, the first server registration center sends a trigger message to the proxy server, to trigger the proxy server to obtain information about the target server that needs to be invoked by each of the server invoker #1 to the server invoker #3, where the trigger message carries the configuration information determined by the first server registration center.

Finally, after being triggered by using the trigger message, the proxy server respectively sends a subscription message #4 to a subscription message #6 to the server registration center #2 to the server registration center #4 in the server cluster #2 to the server cluster #4 based on the configuration information in the trigger message, where the subscription message #4 is used to subscribe to, from the server registration center #2 in the server cluster #2, the target server #a that belongs to the application #A, the subscription message #5 is used to subscribe to, from the server registration center #3 in the server cluster #3, the target server #b that belongs to the application #B, and the subscription message #6 is used to subscribe to, from the server registration center #4 in the server cluster #4, the target server #c that belongs to the application #C.

Manner 3: The configuration information is sent by the server invoker to the proxy server.

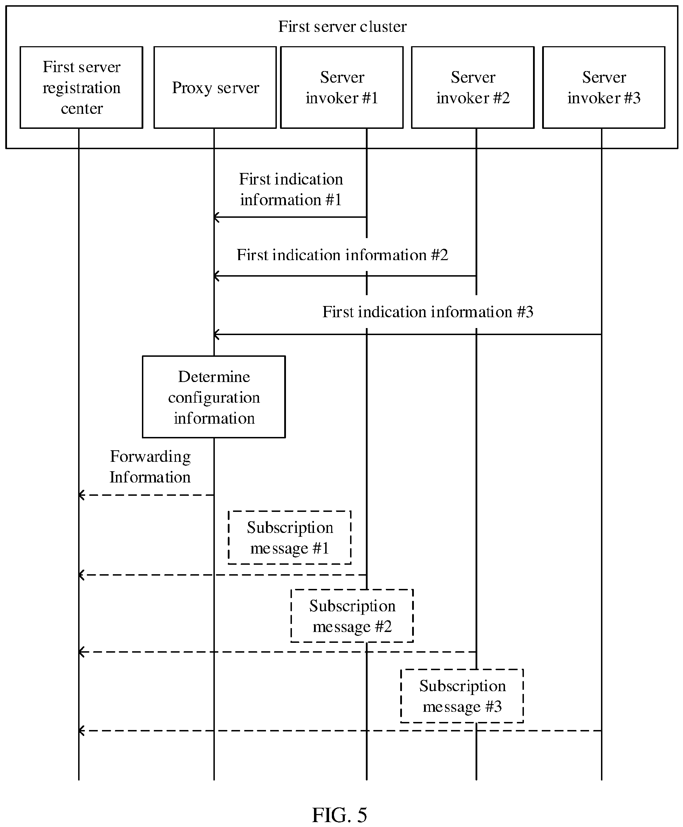

For example, as shown in FIG. 5, at least one server invoker (a server invoker #1 to a server invoker #3 shown in FIG. 5) in the first server cluster needs to invoke a target server across server clusters. Specifically, the at least one server invoker is connected to the proxy server, and separately sends first indication information to the proxy server, where the at least one piece of first indication information is used to determine the configuration information, and the first indication information is used to indicate the proxy server to obtain the information about the at least one target server.

For example, the first server cluster includes three server invokers (the server invoker #1 to the server invoker #3 shown in FIG. 5) that each need to invoke a target server across server clusters, and the three server invokers separately send the first indication information to the proxy server, where each piece of first indication information includes a name of a server cluster including a target server that needs to be invoked by each server invoker, an address of a server registration center in the server cluster including the target server, a name of an application to which the target server belongs, and a name of the target server. Further, the proxy server uses, as the configuration information, the name of the server cluster including the target server that needs to be invoked across server clusters, the address of the server registration center in the server cluster including the target server, the name of the application to which the target server belongs, and the name of the target server that are in the received first indication information, to obtain the information about the at least one target server.

It is assumed that, in the three server invokers, the server invoker #1 needs to invoke a target server #a that is in a server cluster #2 and that belongs to an application #A, the server invoker #2 needs to invoke a target server #b that is in a server cluster #3 and that belongs to an application #B, and the server invoker #3 needs to invoke a target server #c that is in a server cluster #4 and that belongs to an application #C.

First, the server invoker #1 to the server invoker #3 respectively send first indication information #1 to first indication information #3 to the proxy server, where the first indication information #1 carries information about the target server #a that is subscribed to by a server registration center #2 in the server cluster #2 and that belongs to the application #A, the first indication information #2 carries information about the target server #b that is subscribed to by a server registration center #3 in the server cluster #3 and that belongs to the application #B, and the first indication information #3 carries information about the target server #c that is subscribed to by a server registration center #4 in the server cluster #4 and that belongs to the application #C.

Then, the proxy server determines the configuration information based on the received first indication information #1 to first indication information #3. Specifically, the configuration information includes the server cluster #2 to the server cluster #4, addresses of the server registration center #2 to the server registration center #4 in the server cluster #2 to the server cluster #4, the application #A to the application #C, and the target server #a to the target server #c.

Finally, the proxy server respectively sends a subscription message #4 to a subscription message #6 to the server registration center #2 to the server registration center #4 in the server cluster #2 to the server cluster #4 based on the configuration information, where the subscription message #4 is used to subscribe to, from the server registration center #2 in the server cluster #2, the target server #a that belongs to the application #A, the subscription message #5 is used to subscribe to, from the server registration center #3 in the server cluster #3, the target server #b that belongs to the application #B, and the subscription message #6 is used to subscribe to, from the server registration center #4 in the server cluster #4, the target server #c that belongs to the application #C.

In Manner 3, optionally, the at least one server invoker still sends a second subscription message to the first server registration center.

For example, the server invoker #1 to the server invoker #3 respectively send a subscription message #1 to a subscription message #3 to the first server registration center, where the subscription message #1 carries the information about the target server #a that is subscribed to by the server registration center #2 in the server cluster #2 and that belongs to the application #A, the subscription message #2 carries the information about the target server #b that is subscribed to by the server registration center #3 in the server cluster #3 and that belongs to the application #B, and the subscription message #3 carries the information about the target server #c that is subscribed to by the server registration center #4 in the server cluster #4 and that belongs to the application #C.

In Manner 3, optionally, the at least one server invoker does not need to send a second subscription message to the first server registration center. Because the at least one server invoker has sent the first indication information to the proxy server, the proxy server learns of a server invoker that is in the first server cluster including the proxy server and that needs to invoke a server across server clusters, and a server cluster and an application to which a target server that specifically needs to be invoked belongs. In this case, the proxy server may send forwarding information to the first server registration center, to forward the information obtained by the proxy server.

It should be understood that FIG. 5 is merely an example, and does not constitute any limitation on this application. For example, a quantity of server invokers that are in the first server cluster and that each invoke a server across server clusters may be different from that shown in FIG. 5.

It should be further understood that Manner 1 to Manner 3 are merely several possible implementations in which the proxy server provided in this application can learn of the foregoing configuration information, and do not constitute a limitation on this application. In other cases, the foregoing proxy server is deployed in a server cluster, or a server with a function similar to that of the foregoing proxy server is deployed. A method for obtaining, across server clusters, information about a target server that needs to be invoked by a server invoker, in a server cluster including a proxy server, that invokes a server across server clusters falls within the protection scope of this application.

It can be learned from the foregoing descriptions that, after learning of the configuration information, the proxy server may separately send the first subscription message to the at least one second server registration center based on the configuration information. Specifically, the configuration information includes an identifier of the at least one second server cluster, an address of the at least one second server registration center, a name of an application to which the at least one target server belongs, and a name of the at least one target server.

The following provides forms of a plurality of pieces of information included in several pieces of configuration information based on the foregoing relationship between the second server cluster and the first server cluster.

For example, it is assumed that the second server cluster and the first server cluster in FIG. 4 belong to different regions.

For example, a server invoker that is in the first server cluster and that invokes a server across server clusters needs to invoke a target server whose server name is 1 in the second server cluster and that belongs to an application 1. The first server cluster belongs to a region #1, and the second server cluster belongs to a region #2. In addition, the region #2 to which the second server cluster belongs includes only the second server cluster. An identifier of the region #1 is a region 1, and an identifier of the region #2 is a region 2. In this case, the foregoing configuration information includes the following information:
(1) Region 2;
(2) scURL: https://xxx/path;
(3) appl; and
(4) ServiceNamel.

The region 2 (Region 2) is an identifier of the region #2. Because the region #2 includes only the second server cluster, the region 2 may be understood as an identifier of the second server cluster. The server cluster uniform resource locator (service cluster uniform resource locator, scURL) indicates an address of a second server registration center in the second server cluster, the application 1 (application1, app1) indicates a name of the application 1 to which a target server belongs, and ServiceNamel (ServiceNamel) indicates a name of the target server that needs to be invoked by a server invoker in the first server cluster and that belongs to the application 1.

For example, it is assumed that the second server cluster and the first server cluster in FIG. 4 belong to a same region.

For example, a server invoker that is in the first server cluster and that invokes a server across server clusters needs to invoke a target server whose server name is 1 in the second server cluster and that belongs to an application 1. The first server cluster belongs to a region #1, and the second server cluster also belongs to the region #1. A relative identifier of the first server cluster in the region #1 is an SC 1, and a relative identifier of the second server cluster in the region #1 is an SC 2. In this case, the foregoing configuration information includes the following information:
(1) SC 2;
(2) scURL: https://xxx/path;
(3) appl; and
(4) ServiceNamel.

The server cluster 2 (service cluster 2, SC 2) is the relative identifier of the second server cluster in the region #1, the scURL indicates an address of a second server registration center in the second server cluster, appl indicates a name of the application 1 to which a target server belongs, and ServiceNamel indicates a name of the target server that needs to be invoked by a server invoker in the first server cluster and that belongs to the application 1.

For example, it is assumed that the second server cluster and the first server cluster in FIG. 4 belong to different regions, and a region to which the second server cluster belongs includes a plurality of server clusters.

For example, a server invoker that is in the first server cluster and that invokes a server across server clusters needs to invoke a target server whose server name is 1 in the second server cluster and that belongs to an application 1. The first server cluster belongs to a region #1, and the second server cluster belongs to a region #2. In addition, the region #2 to which the second server cluster belongs includes a plurality of server clusters. An identifier of the region #1 is a region 1, an identifier of the region #2 is a region 2, and a relative identifier of the second server cluster in the region #2 is an SC 2. In this case, the foregoing configuration information includes the following information:
(1) Region 2 & SC 2;
(2) scURL: https://xxx/path;
(3) appl; and
(4) ServiceNamel.

The region 2 and the server cluster 2 (region 2 and service cluster 2, Region 2 & SC 2) are the identifier of the region #2 to which the second server cluster belongs and the relative identifier of the second server cluster in the region #2, the scURL indicates an address of a server registration center in the second server cluster, app 1 indicates a name of the application 1 to which a target server belongs, and ServiceNamel indicates a name of the target server that needs to be invoked by a server invoker in the first server cluster and that belongs to the application 1.

Specifically, it can be learned from the foregoing descriptions that the server invocation method provided in this embodiment of this application may be further applied to a microservice architecture. Therefore, ServiceNamel may also be microServiceName1 (microServiceName1).

It should be understood that a server cluster identifier can uniquely determine a server cluster corresponding to the identifier. For example, the server cluster identifier is an index of each of a plurality of server clusters, or the server cluster identifier is a relative identifier in a region.

Further, it can be learned from the foregoing descriptions that the configuration information further includes a name of an application to which the target server belongs and a name of the target server. Based on different applications to which target servers belong, the following further provides forms of a plurality of pieces of information included in several pieces of configuration information.

For example, when target servers belong to a same application, the foregoing configuration information includes the following information:
(1) Region 2, or
(1a) SC 2, or
(1b) Region 2 & SC 2;
(2) scURL: https://xxx/path;
(3) appl;
(4) ServiceNamel; and
(5) ServiceName2.

Herein, (1), (1a), and (1b) correspond to the identifier of the second server cluster, and (2) corresponds to an address of a second server registration center in the second server cluster. Details are not described herein again. In addition, appl indicates a name of the application 1 to which a target server belongs, and ServiceNamel and ServiceName2 indicate names of two target servers that need to be invoked by server invokers in the first server cluster and that belong to the application 1.

For example, when the target server belongs to a plurality of applications, the configuration information includes the following information:
(1) Region 2, or
(1a) SC 2, or
(1b) Region 2 &SC 2;
(2) scURL: https://xxx/path;
(3) appl;
(4) ServiceNamel;
(5) ServiceName2;
(6) app2;
(7) ServiceName3; and
(8) ServiceName4.

Herein, (1), (1a), and (1b) correspond to the identifier of the second server cluster, and (2) corresponds to an address of a second server registration center in the second server cluster. Details are not described herein again. In addition, appl indicates a name of the application 1 to which a target server belongs, ServiceNamel and ServiceName2 indicate names of two target servers that need to be invoked by server invokers in the first server cluster and that belong to the application 1, app2 indicates a name of an application to which a target server belongs, and ServiceName3 and ServiceName4 indicate names of two target servers that need to be invoked by server invokers in the first server cluster and that belong to the application 2.

It should be understood that, there may be a plurality of target servers corresponding to target server information that needs to be obtained by the proxy server, and the plurality of target servers may belong to different applications.

It should be further understood that the foregoing forms of the information included in the configuration information are merely examples, and cannot limit the protection scope of this application. In other cases, configuration information that can enable the proxy server to accurately obtain the information about the at least one target server also falls within the protection scope of this application.

It can be learned from the foregoing descriptions that the proxy server not only can be connected to the first server registration center in the first server cluster, but also can be connected to the second server registration center in the at least one second server cluster. In other words, the proxy server can register with a server registration center in another server cluster.

It can be learned from the foregoing descriptions that a proxy server in a specific server cluster can be connected to server registration centers in a plurality of server clusters, and register information related to the proxy server with the plurality of server registration centers, for example, a name, an address, and an interface of the proxy server.

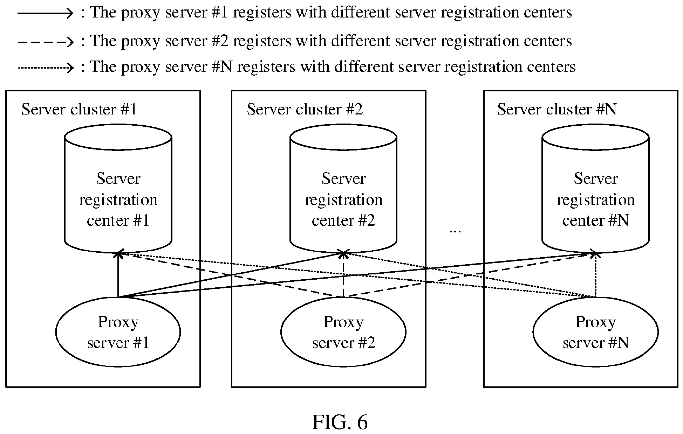

With reference to FIG. 6, the following briefly describes how a proxy server in each server cluster registers with a plurality of server registration centers.

FIG. 6 is a schematic diagram of proxy server registration according to an embodiment of this application. The schematic diagram includes a server cluster #1 to a server cluster #N, each server cluster includes one server registration center (a server registration center #1 to a server registration center #N shown in FIG. 6), and each server cluster includes one proxy server (a proxy server #1 to a proxy server #N shown in FIG. 6).

Specifically, a solid line arrow in FIG. 6 indicates that the proxy server #1 in the server cluster #1 registers information about the proxy server #1 with the server registration center #1 to the server registration center #N; a dashed line arrow in FIG. 6 indicates that the proxy server #2 in the server cluster #2 registers information about the proxy server #2 with the server registration center #1 to the server registration center #N; and a dotted line arrow in FIG. 6 indicates that the proxy server #N in the server cluster #N registers information about the proxy server #N with the server registration center #1 to the server registration center #N.

The foregoing describes in detail how a proxy server separately sends a first subscription message to at least one second server registration center based on configuration information, and describes in detail information and a source that are included in the configuration information. It should be understood that an objective of separately sending the first subscription message to the at least one second server registration center by the proxy server is to obtain information about a target server that is in a first server cluster and that is required by a server invoker that needs to invoke a server across server clusters. Therefore, after separately sending the first subscription message to the at least one second server registration center, the proxy server needs to receive feedback information from the at least one second server registration center. In other words, after S310 is performed, S320 needs to be performed.

S320: The second server registration center sends a response message to the proxy server.

After the second server registration center in the at least one second server cluster receives the first subscription message sent by the proxy server, the second server registration center in each second server cluster searches for the information about the target server based on the name of the application to which the target server that needs to be subscribed to belongs and the name of the target server that are carried in the subscription message, adds the information about the target server to the response message, and feds back the response message to the proxy server.

For ease of description, in FIG. 4, an example in which a second server registration center in one second server cluster sends a response message to a proxy server is used for description. It should be understood that, in this application, a plurality of second server registration centers in a plurality of second server clusters each may send a response message to the proxy server. The second server cluster shown in FIG. 4 is any one of the at least one second server cluster, and the second server registration center in FIG. 4 is a server registration center in a corresponding second server cluster. FIG. 4 is merely an example, and cannot limit the protection scope of this application.

Specifically, information about server providers in the second server cluster is registered with the second server registration center in the second server cluster. The second server registration center in the second server cluster determines, in the information about the registered server providers in the second server registration center based on a name of an application to which a second server belongs and a name of the second server that are carried in a received first subscription message, a specific server provider that belongs to the application corresponding to the name that is of the application to which the second server belongs and that is carried in the subscription message, and a specific server provider whose registration name is the name of the second server that is carried in the subscription message.

Further, the information about the service provider that meets the name of the application to which the second server belongs and the name of the second server that are carried in the subscription message is added to the response message as the information about the second server, and is fed back to the proxy server.

It should be understood that the proxy server receives response messages from server registration centers in a plurality of second server clusters, and each response message carries information that is about a server provider in a corresponding server cluster and that meets a name of an application to which the second server belongs and a name of the second server that are carried in the subscription message sent by the proxy server.

For example, as described in Manner 2 in S310, after receiving the trigger message sent by the first server registration center and performing triggering, the proxy server respectively sends the subscription message #4 to the subscription message #6 to the server registration center #2 to the server registration center #4 in the server cluster #2 to the server cluster #4 based on the configuration information in the trigger message, where the subscription message #4 is used to subscribe to, from the server registration center #2 in the server cluster #2, the target server #a that belongs to the application #A, the subscription message #5 is used to subscribe to, from the server registration center #3 in the server cluster #3, the target server #b that belongs to the application #B, and the subscription message #6 is used to subscribe to, from the server registration center #4 in the server cluster #4, the target server #c that belongs to the application #C.

Assuming that the second server cluster shown in FIG. 4 is the foregoing server cluster #2, and the second server registration center is the foregoing server registration center #2, the server registration center #2 in the server cluster #2 manages information about all server providers in the server cluster #2. When the server registration center #2 receives the subscription message #4 sent by the proxy server, and when the application #A and the target server #a that are carried in the subscription message #4 are obtained, a server provider that belongs to the application #A and whose server name is "#a" is found from the information about the registered server providers in the server registration center #2, information about the matched server provider is added to a response message as the information about the second server, and the response message is fed back to the proxy server.

It should be understood that a process in which a proxy server obtains information about a target server from a second server registration center is similar to the process shown in FIG. 2 in which a server invoker subscribes to information about a server provider in one server cluster. A difference is as follows: That the proxy server obtains the information about the target server does not mean that the proxy server needs to invoke the server, but a server invoker in a first server cluster including the proxy server needs to invoke the target server. However, a process in which the proxy server sends the first subscription information to the second server registration center and subscribes to information about a related target server is similar to a process in which a server invoker in a same server cluster subscribes to a service. A specific subscription process of the proxy server is not described herein again.

Specifically, after the proxy server receives the information about the at least one target server from the at least one second server registration center, to enable a server invoker that is in a first server cluster including the proxy server and that needs to invoke a server across server clusters to smoothly invoke a target server that needs to be invoked, the proxy server needs to register the received information about the at least one target server with the first server registration center in the first server cluster. In other words, S330 in which the proxy server registers the information about the at least one target server with the first server registration center is performed.

Specifically, after the proxy server registers the received information about the at least one target server with the first server registration center, the first server registration center stores the information about the at least one target server. The first server registration center feeds back address information and interface information of the target server to the server invoker based on the second subscription information of the server invoker that is in the first server cluster and that invokes a server across server clusters.

It should be understood that, after the information about the at least one target server has been registered with the first server registration center, when a server invoker that is in the first server cluster and that needs to invoke a target server across server clusters invokes the target server, because information about the target server has been registered with a server registration center in a server cluster including the target server, it is equivalent to that the target server is invoked in a same server cluster.

After the information about the at least one target server has been registered with the first server registration center, a procedure in which a server invoker that is in the first server cluster and that needs to invoke a target server across server clusters invokes the target server is similar to a procedure in which a server provider is invoked in a same server cluster, and the procedure in which a server invoker invokes a target server is not specifically described herein.

It can be learned from the foregoing descriptions that, in this application, a proxy server that can subscribe to information about a second server in the second server cluster across server clusters is deployed in the first server cluster including the first server. In addition, the proxy server registers the subscribed information about the second server with the first server registration center. Because the information about the second server is registered with the first server registration center, for the first server, there is no need to subscribe to the information about the second server in the second server registration center across server clusters, and the information about the second server can be directly subscribed to in the first server registration center. Therefore, compared with the method for invoking a server across server clusters shown in FIG. 3, the method in FIG. 4 has the following advantages.

First, according to the server invocation method provided in this embodiment of this application, after the proxy server subscribes to the information about the second server and registers the information about the second server with the first server registration center, when subsequently invoking the second server, the first server can directly subscribe to the information about the second server in the first server registration center. It is equivalent to invoking a server in the server cluster for the first server, which may be performed as the P2P RPC call shown in FIG. 2. This reduces a delay of invoking a server across server clusters.

In addition, because it is equivalent to invoking a server in the server cluster for the first server, functions such as load balancing, automatic retry upon a failure, fault isolation, circuit breaker and degradation, and flow control that are built in a service framework can still be used, and therefore server invocation reliability is high.

In addition, system resource overheads can be reduced without a need of adding the SLB shown in FIG. 3 to a server cluster.

For example, when a server invoker can invoke a plurality of target servers, the server invoker can select, for invocation, one of a plurality of server providers that meet the invocation.

The following uses the first server in the first server cluster as an example to describe how the first server invokes a server when the first server can invoke a plurality of target servers. The first server is any one of the at least one server invoker that is in the first server cluster and that needs to invoke a server across server clusters.

For example, the second server that can be invoked by the first server is from the at least one second server cluster. Specifically, the first server invokes the second server in the second server cluster according to a preset routing rule. The preset routing rule includes:
a level-1 routing rule, used to route server invocation information of the first server to the second server cluster; and
a level-2 routing rule, used to route the server invocation information of the first server to the second server after the server invocation information of the first server is routed to the second server cluster.

The second server cluster is a second server cluster that is in the at least one second server cluster and that meets the level-1 routing rule, and the second server is a second server that is in the second server cluster and that meets the level-2 routing rule.

For example, the first server subscribes to a target server #1 from the first server registration center.

If the first server registration center finds that the first server cluster includes information about a server provider of the target server #1, the first server registration center feeds back the information about the server provider of the target server #1 to the first server, and the first server preferentially invokes the target server in the first server cluster including the first server. Specifically, the invocation method is shown in FIG. 2, and details are not described herein again.

If the first server registration center finds that none of server providers of the target service #1 in the first server cluster is available or no server provider of the target server #1 is deployed in the first server cluster, the first server registration center triggers the foregoing proxy server to obtain the information about the server provider of the target server #1 across server clusters.

It is assumed that information about server providers of the target server #1 is obtained from all three server clusters (a server cluster #1 to a server cluster #3), and each server cluster includes three server providers (a server provider #1 to a server provider #3). In this case, that the first server invokes a first target server in the second server cluster according to the preset routing rule includes:

The first server invokes the server provider #1 in the server cluster #1.

The server cluster #1 is a server cluster that meets the level-1 routing rule in the three server clusters.

For example, the level-1 routing rule is a random routing rule. To be specific, the first server randomly selects the server cluster #1 from the server cluster #1 to the server cluster #3.

Alternatively, the level-1 routing rule is a delay weight routing rule: The first server allocates different weight coefficients based on average server invocation delays for all server clusters. When a delay is shorter, a weight coefficient is larger, and more server invocation messages are allocated to a low-delay server cluster. To be specific, the first server selects the server cluster #1 with a shortest invocation delay from the server cluster #1 to the server cluster #3.

Alternatively, the level-1 routing rule is a specified server cluster rule: pre-configuring a routing sequence, preferentially performing routing to a specified server cluster, and switching to another server cluster only when each server provider in the specified server cluster is unavailable. To be specific, the first server specifies the server cluster #1 from the server cluster #1 to the server cluster #3.

Alternatively, the level-1 routing rule is a polling rule: sequentially selecting server clusters starting from the first server cluster.

The server provider #1 is a server provider that meets the level-2 routing rule in the three server providers (the server provider #1 to the server provider #3) in the server cluster #1.

For example, the level-2 routing rule is a random routing rule. To be specific, the first server randomly selects the server provider #1 from the server provider #1 to the server provider #3.

Alternatively, the level-2 routing rule is a delay weight routing rule: The first server allocates different weight coefficients based on average server invocation delays for all server providers. When a delay is shorter, a weight coefficient is larger, and more server invocation messages are allocated to a low-delay server provider. To be specific, the first server selects the server provider #1 with a shortest invocation delay from the server provider #1 to the server provider #3.

Alternatively, the level-2 routing rule is a specified server provider rule: pre-configuring a routing sequence, preferentially performing routing to a specified server provider, and switching to another server provider only when the specified server provider is unavailable. To be specific, the first server specifies the server provider #1 from the server provider #1 to the server provider #3.

Alternatively, the level-2 routing rule is a polling rule: sequentially selecting server providers starting from the first server provider.

It should be understood that a server provider in a server cluster may be faulty. For example, a server provider goes offline. If the foregoing proxy server does not perform updating after registering the received information about the at least one target server with the first server registration center, a server provider indicated by information about a specific target server is faulty, which is not known by the first server registration center. Consequently, a server invoker in the first server cluster fails to invoke the target server.

Therefore, to prevent a server invoker in the first server cluster from failing to invoke a server, in this embodiment of this application, the proxy server adds the foregoing subscription message to a heartbeat request message. In this case, when the target server is faulty, the proxy server receives a heartbeat response message sent by the at least one second server registration center. The heartbeat response message includes second indication information, and the second indication information is used to indicate a faulty target server in the at least one target server.

For example, a server in a server cluster may be faulty, in other words, a target server indicated by the information about the at least one target server that is obtained by the proxy server based on the configuration information may be faulty. Therefore, in this embodiment of this application, to improve server invocation accuracy, the proxy server adds the subscription message to the heartbeat request message, and sends the heartbeat request message to a server registration center in a corresponding second server cluster.

For example, after receiving the heartbeat request message sent by the proxy server, the second server registration center in FIG. 4 detects that a specific target server in the server cluster is faulty, and then the second server registration center sends a heartbeat response message to the proxy server. The heartbeat response message includes second indication information, and the second indication information is used to indicate that a target server of the proxy server is faulty and cannot be invoked.

It is assumed that the second server cluster includes three target servers. The proxy server first obtains information about the three target servers from the second server registration center based on the configuration information, and registers the information about the three target servers with the first server registration center. The proxy server continues to send the first subscription message to the second server registration center based on the configuration information, and the first subscription message is carried in the heartbeat request message. When the second server registration center performs server health detection and finds that one of the three target servers is faulty, the second server registration center sends the heartbeat response message to the proxy server, and the heartbeat response message carries the second indication information to indicate a specific faulty target server. Further, the proxy server feeds back the information to the first server registration center. This can improve performance of invoking a server by the server invoker in the first server cluster.

With reference to FIG. 4 to FIG. 6, the foregoing describes in detail specific procedures of the server invocation method provided in the embodiment of this application. With reference to a specific embodiment, the following describes application of a server invocation method provided in an embodiment of this application.

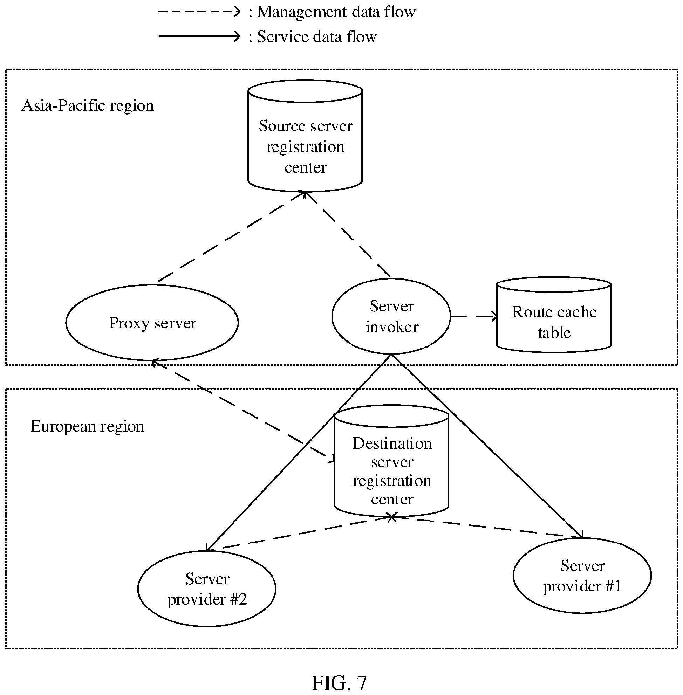

FIG. 7 is a schematic diagram of application of a server invocation method according to an embodiment of this application. The schematic diagram includes the Asia-Pacific region, a source server registration center, a proxy server, and a server invoker that are deployed in the Asia-Pacific region, the European region, and a destination server registration center, a server provider #1, and a server provider #2 deployed in the European region. The server invoker includes a route cache table.

It should be understood that the source server registration center, the proxy server, and the server invoker in the Asia-Pacific region are servers in one server cluster; and the destination server registration center, the server provider #1, and the server provider #2 in the European region are servers in one server cluster.

For example, the server provider #1 and the server provider #2 are servers that provide a login service. A user in the European region can directly invoke the server provider #1 or the server provider #2 to implement the login service when being in the European region. When a user roams from the European region to the Asia-Pacific region, login data of the user does not exist in the Asia-Pacific region because the user is not allowed to roam out of the European region. In this case, the user uses the server invoker in the Asia-Pacific region to implement the login service, and the user can invoke the server provider #1 or the server provider #2 through the proxy server deployed in the Asia-Pacific region. After the invocation succeeds, the login is successful.

Specifically, the server invoker in the Asia-Pacific region needs to invoke, across server clusters, a target server provided by the server provider #1 and/or the server provider #2 in the European region. When deploying the proxy server in the Asia-Pacific region, a developer writes an identifier of the European region, an address of the destination server registration center, a name of an application to which the target server provided by each of the server provider #1 and the server provider #2 belongs, and a name of the target server into the proxy server as preset configuration information, so that the proxy server can obtain information about the server provider #1 and the server provider #2 across the server clusters. The preset configuration information may be configured by using a local configuration file (for example, a markup language (yet another markup language, YAML)). Specifically, the configuration information includes the following information:
(1) a name of the European region;
(2) an address of the destination server registration center: https://xxx/path;
(3) a name of the application to which the target server belongs; and
(4) a name of the target server.

The following separately describes server invocation in FIG. 7 in terms of a management data flow and a service data flow.

### Management data flow

Step 1: The server providers (for example, the server provider #1 and the server provider #2 shown in FIG. 7) deployed in the European region register respective information with the destination server registration center, where the information about the registered servers includes name, address, and interface information of the server providers.

It should be understood that the destination server registration center in FIG. 7 is responsible for performing server information registration and server subscription in the European region, and feeding back, to the proxy server after the proxy server in the Asia-Pacific region is connected to the destination server registration center, information about a server provider that is registered with the destination server registration center and that meets the target server, to invoke a server across server clusters.

That the destination server registration center implements the server information registration includes:

The server provider in the European region connects to the destination server registration center through a software development kit (software development kit, SDK) of the destination server registration center, and registers, with the destination server registration center, address information, name information, interface information, and the like of a server that needs to be registered.

That the destination server registration center implements the server subscription includes:

Based on the configuration information, the proxy server deployed in the Asia-Pacific region connects to the destination server registration center through an SDK of the source server registration center, and obtains information about a server provider that is registered with the destination server registration center and that meets the target server.

Because this embodiment of this application mainly relates to server invocation across server clusters, FIG. 7 does not show server subscription in the European region. Subscribing to a server in one server cluster is described above with reference to FIG. 2, and details are not described herein again.

Step 2: The proxy server obtains the information about the server provider #1 and the server provider #2 from the destination server registration center.

Specifically, the proxy server determines, based on the configuration information of the proxy server, to connect to the destination server registration center through the SDK of the source server registration center, and obtains the information about the server provider #1 and the server provider #2 based on the name of the application to which the target server belongs and the name of the target server that are in the configuration information.

It should be understood that, in this embodiment of this application, the proxy server may be deployed in the Asia-Pacific region in a stand-alone manner or a cluster manner. The stand-alone deployment means that a server cluster in the Asia-Pacific region is deployed on one machine, so that the proxy server is deployed on the one machine. However, generally, to ensure that the server cluster can run smoothly, the server cluster is deployed on a plurality of machines, so that the server cluster can still run when a machine is faulty. In this way, the proxy server needs to be deployed in a cluster manner.

In other words, in this application, a proxy server is deployed in a server cluster, and the proxy server is deployed based on a deployment status of the server cluster.

Step 3: The proxy server registers the information about the server provider #1 and the server provider #2 with the source server registration center.

After obtaining the server provider #1 and the server provider #2 in the destination server registration center, the proxy server registers the server provider #1 and the server provider #2 with the source server registration center. In this way, the server invoker in the Asia-Pacific region can subscribe to the target server in the European region, to invoke a server across cluster servers.

Step 4: The source server registration center feeds back the information about the server provider #1 and the server provider #2 to the server invoker as information about a target server that needs to be invoked by the server invoker.

It should be understood that the source server registration center shown in FIG. 7 is responsible for providing server information registration in the Asia-Pacific region and the European region, and server subscription by the server invoker in the Asia-Pacific region.

That the source server registration center implements server information registration includes:

The server provider in the Asia-Pacific region connects to the source server registration center through the SDK of the source server registration center, and registers, with the source server registration center, address information, name information, interface information, and the like of a server that needs to be registered. The proxy server is responsible for synchronizing and registering the information about the server provider #1 and the server provider #2 in the European region to the source server registration center.

That the source server registration center implements the server subscription includes:

The server invoker in the Asia-Pacific region connects to the source server registration center through the SDK of the source server registration center, and registers the name of the target server that needs to be invoked with the source server registration center. The source server registration center feeds back the address information, the interface information, and the like of the target server that needs to be invoked to the server invoker. The server invoker synchronizes the received address information of the target server to a local routing table for subsequent server invocation and load balancing. The server invoker does not need to concern about information about a location in which the target server is deployed. In other words, the target server may be deployed in the Asia-Pacific region or the European region.

Step 5: Update.

The proxy server needs to implement a heartbeat detection mechanism across server clusters, and performs heartbeat interaction with the target server registration center in the European region. The proxy server adds, to the heartbeat request message, the name of the application to which the target server subscribed to by the proxy server belongs and the name of the target server.

The target server registration center detects running statuses of the subscribed server provider #1 and server provider #2. If a change is found, a heartbeat response including a changed list is sent to the proxy server. After obtaining change list information, the proxy server synchronizes the information to the source server registration center. The source server registration center sends a change notification message to the server invoker. After receiving the change notification message, the server invoker actively queries the latest target server information in the source server registration center, and caches the latest target server information in the local route cache table. During subsequent server invocation, an offline target server or a faulty target server can be deleted, to ensure a success rate of invoking a server across server clusters.

### Service data flow

Step 1: The server invoker invokes a server.

It can be learned from the foregoing management data flow that the information about the target server is cached in the local route cache table of the server invoker. In other words, the server invoker has obtained the information about the server provider #1 and the server provider #2. Therefore, when the server needs to be invoked, the server provider #1 or the server provider #2 is selected according to a routing rule for invocation.

Specifically, the routing rule includes a level-1 routing rule and a level-2 routing rule.

In the embodiment shown in FIG. 7, the proxy server obtains only the information about the server provider #1 and the server provider #2 from the European region. Therefore, the level-1 routing rule of the server invoker is routed to the European region. It should be understood that FIG. 7 is merely an example. When the proxy server obtains information about target servers from a plurality of regions/server clusters, the server invoker needs to select one of the plurality of regions/server clusters according to the level-1 routing rule. Details are not described herein again.

The server invoker selects one of the server provider #1 and the server provider #2 according to the level-2 routing rule for server invocation. For example, if the level-2 routing rule is a random routing rule, the server invoker randomly selects the server provider #1 for server invocation.

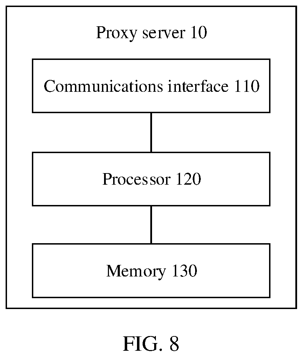

With reference to FIG. 4 to FIG. 7, the foregoing describes in detail the server invocation method provided in this application. With reference to FIG. 8, the following describes in detail a proxy server provided in this application.

FIG. 8 is a schematic diagram of a proxy server 10 according to an embodiment of this application. The proxy server is deployed in a first server cluster. The first server cluster further includes a first server registration center and at least one server invoker. The at least one first server needs to invoke at least one second server from a second server cluster. The second server cluster further includes a second server registration center. As shown in FIG. 8, the apparatus 10 includes a communications interface 110, a processor 120, and a memory 130.

The memory 130 is configured to store a computer program.

The communications interface 110 is configured to receive and send information.

The processor 120 is further configured to invoke the computer program from the memory and run the computer program, so that the proxy server performs the following steps: sending a first subscription message to the second server registration center based on configuration information, where the first subscription message is used to subscribe to information about the at least one invoked second server;
receiving a response message sent by the second server registration center, where the response message carries the information about the at least one invoked second server; and
registering the information about the at least one invoked second server with the first server registration center, so that the at least one first server invokes the at least one second server.

The apparatus 10 completely corresponds to the proxy server in the method embodiment, and a corresponding unit in the apparatus 10 is configured to perform a corresponding step performed by the proxy server in the method embodiment shown in FIG. 4.

The proxy server performs the receiving step in the method embodiment, for example, performs S320 in FIG. 4 of receiving the response message from the second server registration center. The proxy server performs the step implemented or processed inside the proxy server in the method embodiment, for example, performs S330 in FIG. 4 of registering the information about the subscribed target server. The proxy server is further configured to perform the sending step in the method embodiment, for example, perform S310 in FIG. 4 of sending the subscription message to the second server registration center.

This application further provides a computer-readable storage medium. The computer-readable storage medium stores an instruction. When the instruction is run on a computer, the computer is enabled to perform the steps performed by the proxy server in the methods shown in FIG. 4 to FIG. 7.

This application further provides a computer program product including an instruction. When the computer program product is run on a computer, the computer is enabled to perform the steps performed by the proxy server in the methods shown in FIG. 4 to FIG. 7.

This application further provides a chip, including a processor. The processor is configured to read a computer program stored in a memory and run the computer program, to perform a corresponding operation and/or procedure performed by the proxy server in the server invocation method provided in this application. Optionally, the chip further includes the memory. The memory is connected to the processor through a circuit or a cable. The processor is configured to read the computer program in the memory and execute the computer program. Optionally, the chip further includes a communications interface. The processor is connected to the communications interface. The communications interface is configured to receive data and/or information that need/needs to be processed. The processor obtains the data and/or information from the communications interface, and processes the data and/or information. The communications interface may be an input/output interface.

A person of ordinary skill in the art may be aware that, in combination with units and algorithm steps in the examples described in the embodiments disclosed in this specification, the embodiments may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, may be located in one location, or may be distributed on a plurality of network units. Some or all of the units may be selected according to actual requirements to achieve the objectives of the solutions in the embodiments.

In addition, the function units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for indicating a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A server invocation method, wherein the method is used by at least one first server in a first server cluster to invoke at least one second server in a second server cluster, the first server cluster further comprises a first server registration center and a proxy server, the second server cluster further comprises a second server registration center, and the method comprises:
sending, by the proxy server, a first subscription message to the second server registration center based on configuration information, wherein the first subscription message is used to subscribe to information about the at least one invoked second server;
receiving, by the proxy server, a response message sent by the second server registration center, wherein the response message carries the information about the at least one invoked second server; and
registering, by the proxy server, the information about the at least one invoked second server with the first server registration center, so that the at least one first server invokes the at least one second server.

2. The method according to claim 1, wherein
the configuration information is configuration information pre-configured in the proxy server.

3. The method according to claim 1, wherein the method further comprises:
receiving, by the proxy server, a trigger message sent by the first server registration center, wherein the trigger message carries the configuration information, the trigger message is generated in response to that the first server registration center receives at least one second subscription message respectively sent by the at least one first server, and the trigger message is used to trigger the proxy server to obtain the information about the at least one invoked second server.

4. The method according to claim 1, wherein the method further comprises:
receiving, by the proxy server, at least one piece of first indication information respectively sent by the at least one first server; and
determining, by the proxy server, the configuration information based on the at least one piece of first indication information, wherein the first indication information is used to indicate the proxy server to obtain the information about the at least one invoked second server.

5. The method according to any one of claims 1 to 4, wherein
the response message carries second indication information, and the second indication information is used to indicate a faulty second server in the at least one invoked second server.

6. The method according to any one of claims 1 to 5, wherein the first subscription message is carried in a heartbeat request message.

7. The method according to any one of claims 1 to 6, wherein the response message is a heartbeat response message.

8. The method according to any one of claims 1 to 7, wherein the information about the at least one second server is used by the first server to invoke the second server according to a preset routing rule.

9. The method according to claim 8, wherein the preset routing rule comprises:
a level-1 routing rule, used to route server invocation information of the first server to the second server cluster; and
a level-2 routing rule, used to route the server invocation information of the first server to the second server after the server invocation information of the first server is routed to the second server cluster.

10. The method according to any one of claims 1 to 9, wherein the configuration information comprises an identifier of the second server cluster, an address of the second server registration center, a name of an application to which the at least one second server belongs, and a name of the at least one second server.

11. The method according to any one of claims 1 to 10, wherein the first subscription message carries the name of the application to which the at least one second server belongs and the name of the at least one second server.

12. The method according to any one of claims 1 to 11, wherein the first server cluster and the at least one second server cluster are located in different regions.

13. The method according to any one of claims 1 to 12, wherein the information about the second server comprises the name, address information, and interface information of the second server.

14. A proxy server, wherein the proxy server is deployed in a first server cluster, the first server cluster further comprises a first server registration center and at least one first server, the at least one first server invokes at least one second server from a second server cluster, the second server cluster further comprises a second server registration center, and the proxy server comprises:
a communications interface, a processor, and a memory, wherein
the communications interface is configured to send and receive information;
the memory is configured to store a computer program; and
the processor is configured to invoke the computer program from the memory and run the computer program, so that the proxy server performs the following steps:
sending a first subscription message to the second server registration center based on configuration information, wherein the first subscription message is used to subscribe to information about the at least one invoked second server;
receiving a response message sent by the second server registration center, wherein the response message carries the information about the at least one invoked second server; and
registering the information about the at least one invoked second server with the first server registration center, so that the at least one first server invokes the at least one second server.

15. The proxy server according to claim 14, wherein
the configuration information is configuration information pre-configured in the proxy server.

16. The proxy server according to claim 14, wherein the proxy server further performs the following steps:
receiving a trigger message sent by the first server registration center, wherein the trigger message carries the configuration information, the trigger message is generated in response to that the first server registration center receives at least one second subscription message respectively sent by the at least one first server, and the trigger message is used to trigger the proxy server to obtain the information about the at least one invoked second server.

17. The proxy server according to claim 14, wherein the proxy server further performs the following steps:
receiving at least one piece of first indication information respectively sent by the at least one first server; and
determining the configuration information based on the at least one piece of first indication information, wherein the first indication information is used to indicate the proxy server to obtain the information about the at least one server.

18. The proxy server according to any one of claims 14 to 17, wherein the heartbeat response message carries second indication information, and the second indication information is used to indicate a faulty server in the at least one invoked second server.

19. The proxy server according to any one of claims 14 to 18, wherein the first subscription message is carried in a heartbeat request message.

20. The proxy server according to any one of claims 14 to 19, wherein the response message is a heartbeat response message.

21. The proxy server according to any one of claims 14 to 20, wherein the information about the at least one server is used by the first server to invoke the second server according to a preset routing rule.

22. The proxy server according to claim 21, wherein the preset routing rule comprises:
a level-1 routing rule, used to route server invocation information of the first server to the second server cluster; and
a level-2 routing rule, used to route the server invocation information of the first server to the second server after the server invocation information of the first server is routed to the second server cluster.

23. The proxy server according to any one of claims 14 to 22, wherein the configuration information comprises an identifier of the second server cluster, an address of the second server registration center, a name of an application to which the at least one second server belongs, and a name of the at least one second server.

24. The proxy server according to any one of claims 14 to 23, wherein the first subscription message carries the name of the application to which the at least one second server belongs and the name of the at least one second server.

25. The proxy server according to any one of claims 14 to 24, wherein the first server cluster and the at least one second server cluster are located in different regions.

26. The proxy server according to any one of claims 14 to 25, wherein the information about the second server comprises the name, address information, and interface information of the second server.

27. A system, comprising:
a first server registration center, at least one first server, and the proxy server according to any one of claims 14 to 26.

28. A computer-readable storage medium, comprising a computer program, wherein when the computer program is run on a computer, the computer is enabled to perform the server invocation method according to any one of claims 1 to 13.
